# EUROPÄISCHE PATENTSCHRIFT

(11) **EP 2 251 603 B1**
(45) Veröffentlichungstag und Bekanntmachung des Hinweises auf die Patenterteilung: **08.06.2016**
(21) Anmeldenummer: 10159931.4
(22) Anmeldetag: 14.04.2010
(51) Int. Cl.: F16K 1/20

(54) **Absperrsystem mit einer Schwenkklappe für große Leitungsquerschnitte**
Blocking system for large sections of piping with a swinging flap
Système de verrouillage doté d'un clapet basculant pour sections transversales de conduites de grande taille

(30) Priorität: 12.05.2009 DE 102009020843
(43) Veröffentlichungstag der Anmeldung: 17.11.2010
(73) Patentinhaber: Janich GmbH & Co. KG, 96271 Grub am Forst (DE)
(72) Erfinder: Janich, Hans-Jürgen, Dipl.-Ing.(FH), 96271, Grub am Forst (DE)
(74) Vertreter: Tetzner, Michael

(56) Entgegenhaltungen:
- EP-A2- 1 978 304
- DE-A1- 1 500 005
- DE-A1- 4 446 395
- US-A- 2 302 695

## Beschreibung

Die Erfindung betrifft ein Absperrsystem für große Leitungsquerschnitte mit einem mit Leitungsanschlüssen versehenen Klappengehäuse und einer darin zwischen zwei Endstellungen hin und her schwenkbaren Schwenkklappe.

Absperrsysteme dieser Art werden insbesondere in Gasturbinenanlagen und Rauchgasreinigungsanlangen eingesetzt. Um einen gasdichten Abschluss zu erreichen, muss der großformatige Flügel in Absperrstellung mit großem Druck an die ortsfeste Dichtfläche angepresst werden. Außerdem sind in den Endlagen auch hohe Differenzdrücke zu bewältigen. In der DE 10 2007 016 554 A1, der DE 38 73 509 T2, der DE 40 30 611 A1 und der DE 33 18 202 A1 werden für das Schwenken der Klappe Kniehebelsysteme eingesetzt, die sich als besonders geeignet herausgestellt haben, weil sich in den jeweiligen Endstellungen der Schwenkklappe durch die Wirkung des Kniehebels mit relativ geringen Antriebs-Drehmomenten hohe Schließkräfte erzeugen lassen.

Bei der Verwendung eines Kniehebels ist es vorteilhaft, die Antriebswelle möglichst nahe in der Mitte der Schwenkklappe anzuordnen, weil dadurch die Wirkung des Kniehebels in den Endstellungen am besten zur Entfaltung kommt und die Schließkraft am Umfang der Schwenkklappe annähernd gleich ist.

Diese Anordnung der Antriebswelle hat aber in einer der Endstellungen den Nachteil, dass der Querschnitt des Leitungsanschlusses durch die Antriebswelle und das Kniehebelsystem entsprechend verengt wird, sodass dieser Querschnittsverlust durch einen entsprechend höheren Energiebedarf des Gasgebläses ausgeglichen werden muss. In einer der Endstellungen wird die Hohlwelle außerdem einseitig vom Heißgas angeströmt, sodass es infolgedessen zu starken Spannungsunterschieden bis hin zum Verbiegen der Welle kommen kann, was wiederum zu einer Schwergängigkeit bzw. Blockierung des Antriebs führen kann.

Weiterhin ist aus der DE 44 46 395 A1 eine Drehflügelklappe für Heißgas-Rohrleitungen bekannt, die einen Trägerteil und einen am Trägerteil befestigten Flügelteil aufweist, wobei der Trägerteil als offenes und in einer Öffnungsstellung der Klappe vom Heißgas durchströmbares Gitterwerk ausgebildet ist. Die Schwenkachse der Regel- und Absperrklappe wird durch an gegenüberliegenden Stirnseiten des Trägerteils gehalterten Wellenstümpfen gebildet.

Der Erfindung liegt daher die Aufgabe zugrunde, ein Absperrsystem für große Leitungsquerschnitte anzugeben, welches sich durch einen geringeren Querschnittsverlust auszeichnet.

Erfindungsgemäß wird diese Aufgabe durch die Merkmale des Anspruches 1 gelöst.

Das erfindungsgemäße Absperrsystem für große Leitungsquerschnitte besteht im Wesentlichen aus einem Klappengehäuse, das einen ersten, einen zweiten und einen dritten Leitungsanschluss aufweist, und einer darin zwischen zwei Endstellungen hin und her schwenkbaren Schwenkklappe, wobei die Schwenkklappe wahlweise den zweiten oder dritten Leitungsanschluss verschließt, sowie einer Antriebseinrichtung mit einer Antriebswelle, die über ein Kniehebelsystem mit der Schwenkklappe in Verbindung steht, wobei das Kniehebelsystem wenigstens einen ersten, drehfest mit der Antriebswelle verbundenen Kniehebel und einen gelenkig damit und mit der Schwenkklappe verbundenen zweiten Kniehebel umfasst. Die Antriebswelle ist nach Art eines Gittermastes ausgebildet ist und zumindest der eine drehfest mit der Antriebswelle verbundenen Kniehebel ist ebenfalls nach Art eines Gittermastes ausgebildet, wobei die Antriebswelle und zumindest der eine drehfest mit der Antriebswelle verbundene Kniehebel weisen einen eckigen Querschnitt auf.

Auf diese Weise ist die Antriebswelle vom Gas durchströmbar, sodass sich der Querschnittsverlust gegenüber einer Ausführung als Hohlwelle bei geöffneter Schwenkklappe um etwa 10 bis 20% verringert. Dementsprechend ist auch ein entsprechend geringerer Kraftbedarf des Gasgebläses erforderlich. Die Ausbildung der Antriebswelle nach Art eines Gittermastes hat zudem den Vorteil, dass die Antriebswelle gegenüber den bisher verwendeten Hohlwellen wesentlich kostengünstiger und aus leicht erhältlichem Normmaterial gefertigt werden kann.

Die Durchströmbarkeit der Antriebswelle verringert aber nicht nur den Querschnittsverlust, sondern ermöglicht auch eine sehr gleichmäßige Erwärmung der Antriebswelle durch die oftmals sehr heißen Gase, sodass Spannungsunterschiede und insbesondere ein Verbiegen der Welle vermieden werden kann. Durch die Ausbildung des ebenfalls nach Art eines Gittermastes ausgebildeten Kniehebels wird der Querschnittsverlust weiter reduziert.

Weitere Ausgestaltungen der Erfindung sind Gegenstand der Unteransprüche.

Gemäß einer Ausgestaltung der Erfindung erstreckt sich die Antriebswelle in einer Endstellung der Schwenkklappe quer über den Leitungsquerschnitt und wird von einem durch den Leitungsanschluss strömenden Gas durchströmt.

Die nach Art eines Gittermastes ausgebildete Antriebswelle bzw. der entsprechend ausgebildete Kniehebel weisen vorzugsweise einen quadratischen Querschnitt auf. An den beiden Enden der nach Art eines Gittermastes ausgebildeten Antriebswelle ist jeweils ein Wellenzapfen gehaltert, der im Klappengehäuse gelagert ist.

Weitere Vorteile und Ausgestaltungen der Erfindung werden im Folgenden anhand der Beschreibung und der Zeichnung näher erläutert.

In der Zeichnung zeigen
- Fig. 1: eine dreidimensionale Darstellung des Absperrsystems und
- Fig. 2: eine vergrößerte, dreidimensionale Darstellung der Antriebswelle mit Kniehebelsystem.

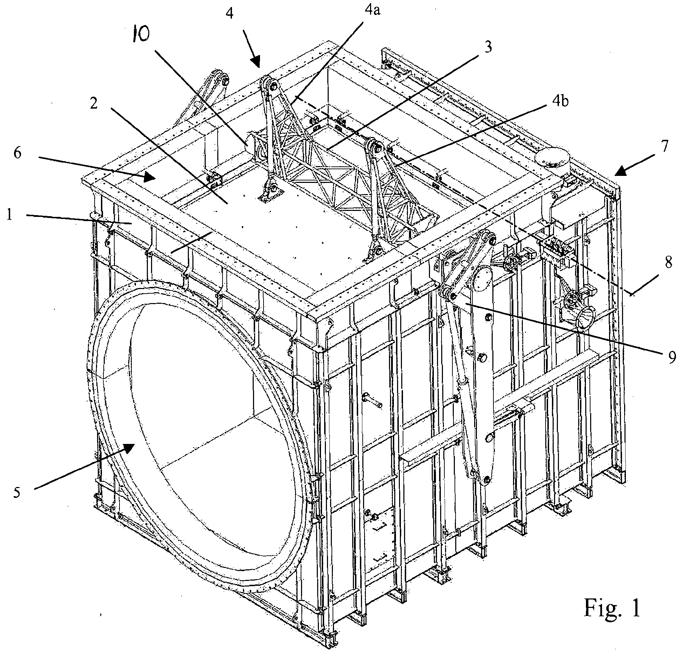

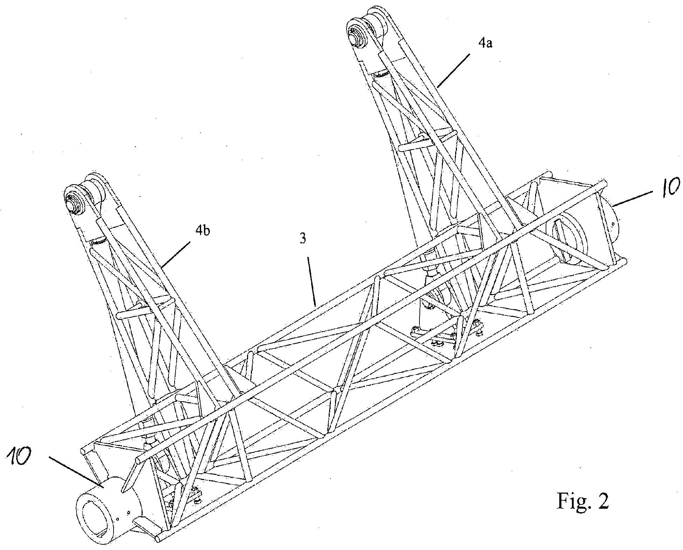

Das in Fig. 1 und 2 dargestellte Absperrsystem für große Leitungsquerschnitte besteht im Wesentlichen aus einem Klappengehäuse 1, einer Schwenkklappe 2 sowie einer Antriebseinrichtung mit einer Antriebswelle 3, die über wenigstens ein Kniehebelsystem 4 mit der Schwenkklappe in Verbindung steht. Die Schwenkklappe 2 ist um eine strichpunktiert angedeutete Schwenkachse 8 drehbar gelagert, sodass eine Drehbewegung der Antriebswelle 3 über das Kniehebelsystem ein Schwenken der Schwenkklappe 2 um die Schwenkachse 8 bewirkt

Das Klappengehäuse 1 ist mit einem ersten, einem zweiten und einem dritten Leitungsanschluss 5, 6 und 7 versehen, wobei die Schwenkklappe 2 wahlweise den zweiten Leitungsanschluss 6 (siehe Fig. 1) oder den dritten Leitungsanschluss 7 verschließt.

Die Antriebswelle 3 ist nach Art eines Gittermastes ausgebildet, wobei es sich hierbei insbesondere um eine Rohrgitterkonstruktion handeln kann. Die Fachwerkskonstruktion kann aber beispielsweise auch aus Winkelprofilen (z.B. L-oder T-Trägern) gebildet werden. Die Antriebswelle 3 erstreckt sich im dargestellten Ausführungsbeispiel quer über den lichten Querschnitt des zweiten Leitungsanschlusses 6, wobei an ihren Enden jeweils Wellenzapfen 10 gehaltert sind, die in jeweils einem geeigneten Lager des Klappengehäuses 1 gelagert sind.

Die Schwenkklappe 2 wirkt in den beiden Endstellungen mit geeignet ausgebildeten Dichtungselementen zusammen, die insbesondere gemäß der EP-B1-1 092 899 ausgebildet sein können. Wenn in der vorliegenden Anmeldung von einem Absperrsystem für große Leitungsquerschnitte die Rede ist, so sind Leitungsquerschnitte von mehr als 15 m², insbesondere mehr als 20 m², bzw. mehr als 40 m², gemeint.

Befindet sich die Schwenkklappe 2 in der Schließstellung des dritten Leitungsanschlusses 7 (nicht gezeigt) wird die Antriebswelle 3 von dem über den ersten Leitungsanschluss 5 eintretenden und aus dem zweiten Leitungsanschluss 6 austretenden Gas durchströmt.

Die Drehbewegung der Antriebswelle 3 wird im dargestellten Ausführungsbeispiel durch zwei jeweils aus zwei Kniehebeln bestehende Kniehebelsysteme 4 auf die Schwenkklappe 2 übertragen. Dabei sind zumindest die mit der Antriebswelle 3 verbundenen Kniehebel 4a, 4b ebenfalls nach Art eines Gittermastes ausgebildet. Auf diese Weise kann der Querschnittsverlust in der Öffnungsstellung des zweiten Leitungsanschlusses 6 weiter reduziert werden.

Die Drehbewegung der Antriebswelle 3 wird über einen geeigneten Antriebsmechanismus 9 bewirkt, der beispielsweise in der EP 1 978 304 A1 näher beschrieben ist.

Die Antriebswelle 3 und die Kniehebel 4a, 4b weisen einen eckigen Querschnitt auf, wobei insbesondere ein quadratischer, ein rechteckiger, ein dreieckiger oder aber auch ein vieleckiger Querschnitt in Betracht kommen. Die eckige Querschnittsform weist eine sehr hohe Stabilität auf und ermöglicht eine sehr einfache und drehfeste Anbindung der Kniehebel 4a, 4b an die Antriebswelle 3.

## Patentansprüche

1. Absperrsystem für große Leitungsquerschnitte mit einem Klappengehäuse (1), das einen ersten, einen zweiten und einen dritten Leitungsanschluss (5, 6, 7) aufweist und einer darin zwischen zwei Endstellungen hin und her schwenkbaren Schwenkklappe (2), wobei die Schwenkklappe (2) wahlweise den zweiten oder dritten Leitungsanschluss (6, 7) verschließt, sowie einer Antriebseinrichtung mit einer Antriebswelle (3), die über ein Kniehebelsystem (4) mit der Schwenkklappe in Verbindung steht, wobei das Kniehebelsystem (4) wenigstens einen ersten, drehfest mit der Antriebswelle (3) verbundenen Kniehebel (4a, 4b) und einen gelenkig damit und mit der Schwenkklappe (2) verbundenen zweiten Kniehebel umfasst,
**dadurch gekennzeichnet, dass** die Antriebswelle (3) nach Art eines Gittermastes ausgebildet ist und zumindest der eine drehfest mit der Antriebswelle (3) verbundenen Kniehebel (4a, 4b) ebenfalls nach Art eines Gittermastes ausgebildet ist, wobei die Antriebswelle (3) und zumindest der eine drehfest mit der Antriebswelle (3) verbundene Kniehebel (4a, 4b) einen eckigen Querschnitt aufweisen.

2. Absperrsystem nach Anspruch 1, **dadurch gekennzeichnet, dass** sich die Antriebswelle (3) in einer Endstellung der Schwenkklappe (2) quer über den Leitungsquerschnitt erstreckt und von einem durch den zweiten Leitungsanschluss (6) strömenden Gas durchströmbar ist.

3. Absperrsystem nach Anspruch 1, **dadurch gekennzeichnet, dass** die nach Art eines Gittermastes ausgebildete Antriebswelle (3) einen quadratischen Querschnitt aufweist.

4. Absperrsystem nach Anspruch 1, **dadurch gekennzeichnet, dass** an den beiden Enden der nach Art eines Gittermastes ausgebildeten Antriebswelle (3) jeweils ein Wellenzapfen (10) gehaltert ist.

## Claims

1. Shut-off system for large pipe cross-sections having a flap housing (1) which is provided with a first, a second and a third pipe connection (5, 6, 7), and a pivot flap (2) which can be pivoted back and forth therein between two end positions, wherein the pivot flap (2) selectively closes the second or third pipe connection (6, 7)and a drive device having a drive shaft (3) which is connected to the pivot flap by means of a toggle lever system (4), wherein the toggle lever system (4) comprises at least a first toggle lever (4a, 4b) which is connected in a rotationally secure manner to the drive shaft (3) and a second toggle lever which is connected in an articulated manner thereto and to the pivot flap (2),
**characterised in that** the drive shaft (3) is constructed in the manner of a lattice tower and at least the one toggle lever (4a, 4b) being connected in a rotationally secure manner to the drive shaft (3) is also constructed in the manner of a lattice tower, wherein the drive shaft (3) and at least the one toggle lever (4a, 4b) being connected in a rotationally secure manner to the drive shaft (3) have an angular cross-section.

2. Shut-off system according to claim 1, **characterised in that** the drive shaft (3) extends in one end position of the pivot flap (2) transversely over the pipe cross-section and a gas which flows through the second pipe connection (6) is able to flow through it.

3. Shut-off system according to claim 1, **characterised in that** the drive shaft (3) which is constructed in the manner of a lattice tower has a square cross-section.

4. Shut-off system according to claim 1, **characterised in that** a shaft journal (10) is retained at each of the two ends of the drive shaft (3) which is constructed in the manner of a lattice tower.

## Revendications

1. Système de fermeture pour des sections transversales de conduites de grande taille, lequel comprend un boîtier (1), qui est doté d'un premier, d'un deuxième et d'un troisième raccord de conduite (5, 6, 7), et un clapet basculant (2), qui peut basculer en va et vient dans celui-ci, entre deux positions finales, le clapet basculant (2) fermant, au choix, le deuxième ou le troisième raccord de conduite (6, 7), ainsi qu'un système d'entraînement doté d'un arbre de commande (3), qui est relié au clapet basculant par l'intermédiaire d'un système de leviers à genouillère (4), sachant que le système de leviers à genouillère (4) est doté d'au moins un premier levier à genouillère (4a, 4b), qui est relié solidaire en rotation à l'arbre de commande (3), et d'un deuxième levier à genouillère, qui est articulé sur celui-ci et sur le clapet basculant (2),
**caractérisé en ce que** l'arbre de commande (3) est réalisé à la matière d'un mât en treillis et qu'au moins le levier à genouillère (4a, 4b), qui est relié solidaire en rotation avec l'arbre de commande (3), est aussi réalisé à la manière d'un mât en treillis, sachant que l'arbre de commande (3) et au moins le levier à genouillère (4a, 4b), qui est relié solidaire en rotation à l'arbre de commande (3), sont dotés d'une section transversale angulaire.

2. Système de fermeture selon la revendication 1,
**caractérisé en ce que**, dans une position finale du clapet basculant (2), l'arbre de commande (3) s'étend transversalement sur la section transversale de la conduite et peut être traversé par du gaz qui s'écoulant à travers le deuxième raccord de conduite (6).

3. Système de fermeture selon la revendication 1,
**caractérisé en ce que** l'arbre de commande (3), réalisé à la manière d'un mât en treillis, est doté d'une section transversale carrée.

4. Système de fermeture selon la revendication 1,
**caractérisé en ce que**, sur chacune des deux extrémités de l'arbre de commande (3), réalisé à la manière d'un mât en treillis, est maintenu un tourillon d'arbre (10).
